# EUROPÄISCHE PATENTSCHRIFT

(11) **EP 0 621 668 B1**
(45) Veröffentlichungstag und Bekanntmachung des Hinweises auf die Patenterteilung: **02.04.1997**
(21) Anmeldenummer: 94101362.5
(22) Anmeldetag: 31.01.1994
(51) Int. Cl.: H02B 1/20, H02B 1/14, H02G 5/04

(54) **Berührungsschutz für Stromverteilschienen**
Protection against accidental contact for busbars
Protection contre les contacts accidentels pour des barres omnibus

(30) Priorität: 20.04.1993 DE 4312682
(43) Veröffentlichungstag der Anmeldung: 26.10.1994
(73) Patentinhaber: ELEK GMBH, D-41470 Neuss (DE)
(72) Erfinder: Loosen, Gottfried, D-47877 Willich (DE); Noreike, Gerhard, D-41564 Kaarst (DE); Obsommer, Nikolaus, D-41470 Neuss (DE); Rübsam, Hans J., D-40670 Meerbusch (DE)
(74) Vertreter: Palgen, Peter, Dr. Dipl.-Phys.

(56) Entgegenhaltungen:
- DE-A- 2 730 929
- DE-U- 8 714 583

## Beschreibung

Die Erfindung bezieht sich auf einen Berührungsschutz der dem Oberbegriff des Anspruchs 1 entsprechenden Art.

Schranksysteme für Energieverteilanlagen, in denen Leistungsschalter, Lasttrennschalter, Sicherungsschalter und Anzeigegeräte untergebracht sind, finden überall dort Verwendung, wo einzelne Energieverbraucher oder Gruppen von Energieverbrauchern separat gegen eine Energieeinspeisestelle abgesichert, schalt- und kontrollierbar sein sollen. Um im Störungsfalle die im Schaltschrank untergebrachten Schalt- und Steuergeräte unter Betriebsbedingungen der angeschlossenen Geräte - zur Vermeidung von längeren Ausfallzeiten - austauschen zu können, hat sich ein modulares Aufbauprinzip durchgesetzt, bei dem die Schalteinheiten einzeln ohne Unterbrechung der Stromeinspeisung durch Herausziehen oder Einschieben einzelner Schaltgeräte bei selbsttätiger Dekontaktierung bzw. Kontaktierung mit den stromführenden mindestens einen Teil der Feldverteilschienen bildenden Kontaktschienen gewechselt werden können.

Bei der Weiterentwicklung von Energieverteilern geht mit der möglichst schnellen Auswechselbarkeit der Schaltgeräte das Bestreben nach einer möglichst hohen Funktionssicherheit und vor allem nach einem optimalen Personenschutz einher. So müssen stromführende Teile nach der Entfernung eines Schaltgerätes vor einer zufälligen Berührung durch das Bedienpersonal wirksam geschützt sein, eine Eigenschaft, die mittels eines genormten Prüffingers nach VDE 0470, Teil 2, kontrollierbar ist.

Bei einer bekannten Ausführungsform sind dazu die stromführenden Feldverteilschienen in den gefährdeten Bereichen mit isolierenden Platten abgedeckt, welche schmale längliche Durchbrüche aufweisen, durch die ein entsprechend schmaler Kontakt durchgeführt werden kann, jedoch wegen der kleinen Dimensionen der Durchbrüche eine Berührung einer Feldverteilschiene mittels des Prüffingers nicht zuläßt.

Ein Nachteil dieser Ausführungsform ist es, daß durch die zulässigen Abmessungen der Durchbrüche die Dimensionen der auf der Rückseite der Schaltgeräte angeordneten Aufschiebkontakte, sog. Stecktulpen begrenzt ist, was im Falle von Schalteinheiten hoher Nennströme zu extremen Stromdichten an den Kontakten und einer entsprechenden Wärmeentwicklung führen kann, wodurch die Funktionssicherheit des Gesamtsystems bei dieser Ausführungsform herabgesetzt ist.

Diesen Nachteil versuchen andere Ausführungsformen dadurch zu verbessern, daß die Feldverteilschienen mittels Plattenanordnungen abgedeckt sind, welche in bestimmten Bereichen, die für den Einschub von Schaltgeräten vorgesehen sind, vertikal oder horizontal verschiebbar oder auch schwenkbar angeordnet sind. Zwar sind bei diesen Ausführungsformen die Dimensionen der an den Schaltgeräten befindlichen Kontakte weniger begrenzt, jedoch sind derartige Plattenanordnungen aufwendig in ihrer Herstellung, und die Anordnung der Schaltgeräte ist an eine Plattenunterteilung gebunden.

Der letztgenannte Nachteil ist bei der Stromführungsschiene nach der DE 27 30 929 A1 nicht vorhanden, bei der der Isolierträger einen im wesentlichen U-förmigen zur Einschiebseite der Klemmkontakte hin offenen Kanal bildet. An der Innenseite der Schenkel sind einander gegenüberliegende streifenförmige Leiter eingebettet. Vom Boden des Kanals springt gegen die Einschubseite eine aus zwei zangenartig verschwenkbaren Schenkeln bestehende Abdeckleiste vor. Die Schenkel liegen am Boden des Kanals beieinander und legen sich im kräftefreien Zustand außerhalb der Leiter an die Schenkel des Kanals, so daß die Leiter in diesem Zustand verdeckt sind. Die Schenkel der Klemmkontakte dringen beim Einschieben zwischen die Schenkel der Abdeckleiste und den jeweiligen Schenkel des Kanals unter Zusammendrückung der Schenkel der Abdeckleiste ein, bis sie in Kontakt mit den Leitern kommen. Die Herstellung dieser Stromführungsschiene ist aufwendig. Die Bauart ist für geringere Leistungen zum Beispiel für Leuchtquellen vorgesehen, jedoch für größere Leistungen, wie sie in zentralen Schaltschränken vorkommen, nicht geeignet.

Aus dem DE-GM 87 14 583 ist eine Abdeckung für ein Sammelschienensystem zwischen auf die Sammelschienen aufgesetzten Geräten bekannt, bei der für mehrere Sammelschienen eine gemeinsame Abdeckung mit einem gemeinsamen Aufschnappmittel vorgesehen ist. Die Abdeckung erstreckt sich zwischen den auf die Sammelschienen aufgesetzten Geräten und muß daher an deren Abstand angepaßt sein bzw. es ist nicht möglich, die Geräte ohne weiteres, d.h. ohne Änderung der zugehörigen Abdeckungen an beliebigen Stellen anzubringen.

Der Erfindung liegt die Aufgabe zugrunde, einen Berührungsschutz der dem Oberbegriff des Anspruchs 1 entsprechenden Art zu schaffen, der einfach in der Herstellung ist, die Montierfähigkeit der Schaltgeräte auf den Feldverteilschienen ohne Einschränkungen über die gesamte Höhe zuläßt und einen optimalen Personenschutz bei einer erhöhten Funktionssicherheit gewährleistet.

Diese Aufgabe wird durch die in Anspruch 1 wiedergegebene Erfindung gelöst.

Durch die auf ihrer Länge einen gleichbleibenden Querschnitt aufweisenden Abdeckprofile ergeben sich längs der Kontaktschiene überall gleiche Verhältnisse, so daß die Stecktulpen, die meist an der Rückseite eines Schaltgerätes angebracht sind und mittels dessen dieses an den Kontaktschienen montiert wird, an beliebiger Stelle ohne Rücksicht auf etwaige vorher festgelegte Einteilungen gesetzt werden können. Die Kontaktschienen werden beim Setzen der Klemmkontakte in viel kleineren Bereichen freigelegt als es bei den bekannten beweglichen Abdeckklappen der Fall ist.

Eine wichtige Ausgestaltung ist die Abdeckleiste nach Anspruch 2, die die elektrische Zugänglichkeit der Kontaktschiene von vorn unterbindet und im Verein mit den vorderen Bereichen der Abdeckprofile die Kontaktschiene vor Berührungen praktisch völlig abschirmt, ohne das Einführen der Klemmkontakte zu behindern.

Versuche haben gezeigt, daß die zum Aufschieben eines Schaltgerätes vom Personal aufzubringende Kraft gegenüber zu den bisher bekannten Ausführungsformen dadurch erheblich verringert werden kann, daß gemäß Anspruch 3 die Kontaktschiene bzw. die Abdeckleiste einen symmetrisch zur Mittelebene nach vorn verjüngenden Querschnitt aufweisen.

Ein Haken oder Hängenbleiben der Klemmkontakte wird vermieden, wenn nach Anspruch 4 die vorderen Längskanten der Kontaktschiene bzw. der Abdeckleiste abgerundet sind.

Besonders leicht und sicher an einer Kontaktschiene zu montieren ist die Abdeckleiste, wenn sie gemäß Anspruch 5 auf ihrer Rückseite ein hinterschnittenes Profil aufweist, welches mit der ein Gegenprofil bildenden Vorderseite der Kontaktschiene durch Einrasten oder Einschieben verbindbar ist.

Damit sich beim Einführen der Klemmkontakte kein Reibungswiderstand an Kanten ergibt und insbesondere, damit beim Herausziehen der Klemmkontakte beim Entfernen eines Schaltgeräts die Abdeckleiste nicht von der Vorderseite der Kontaktschiene abgerissen wird, empfiehlt sich die Ausgestaltung nach Anspruch 6.

Für die Widerstandsfähigkeit der Abdeckleiste ist es von Vorteil, wenn sie aus einem temperaturbeständigen Kunststoff hergestellt ist (Anspruch 7).

Für die Herstellung der Abdeckleiste besonders geeignet erwies sich ein mit 60% Glasfaser gefüllter Polyester (Anspruch 8).

Alternative Ausführungen der Abdeckprofile sind Gegenstand der Ansprüche 9 und 10.

Eine doppelte Abwinklung nach Anspruch 11 ermöglicht gleichzeitig die Unterbringung von Befestigungselementen zwischen den Abdeckprofilen und die Versteifung ihres vorderen Bereichs, so daß dieser gerade und parallel zu der Kontaktschiene bleibt.

Die gesamte Länge einer Feldverteilschiene ist zur Montage eines Schaltgerätes nutzbar und die Funktionssicherheit wird weiter erhöht, wenn gemäß Anspruch 12 die Feldverteilschiene im Querschnitt als 90° Winkelprofil ausgebildet ist, wobei der eine Schenkel einen der Montage der Feldverteilschiene mittels Isolierträger an einem Träger und gleichzeitig der Kontaktierung mit Sammelschienen dienenden Befestigungsschenkel, der andere Schenkel die Kontaktschiene zum Aufschieben der Stecktulpen bildet.

Eine besonders hohe Kurzschlußfestigkeit der Feldverteilschiene sowie eine wesentliche Senkung der Verlustleistung bei niedriger Grenzerwärmung und damit eine weitere Erhöhung der Funktionssicherheit kann dadurch erzielt werden, daß die Schenkeldicke des Winkelprofils 10 mm beträgt (Anspruch 13).

In der Zeichnung ist ein Ausführungsbeispiel der Erfindung schematisch illustriert.
Fig. 1 zeigt eine Ansicht eines für die Verwendung des erfindungsgemäßen Berührungsschutzes geeigneten Schranksystems in perspektivischer Darstellungsweise;
Fig. 2 zeigt die Rückseite eines Schaltgeräts mit von vorn auf die Feldverteilschienen aufschiebbaren Kontakten (Stecktulpen);
Fig. 3 zeigt einen Ausschnitt des erfindungsgemäßen Berührungsschutzes im Bereich eines Isolierträgers in einer Vorderansicht;
Fig. 4 zeigt den erfindungsgemäßen Berührungsschutz gemäß der Ansicht IV-IV in Fig. 3 von oben;
Fig. 5, 6 und 7 zeigen drei verschiedene Ausführungsformen des Verbindungsprofils zwischen der elektrisch isolierenden Abdeckleiste und der Kontaktschiene in einer die Feldverteilschiene querschneidenden Darstellung;
Fig. 8 und 9 zeigen Teilansichten entsprechend Fig. 4 des vorderen Bereichs der Kontaktschiene bei einer anderen Ausführungsform.

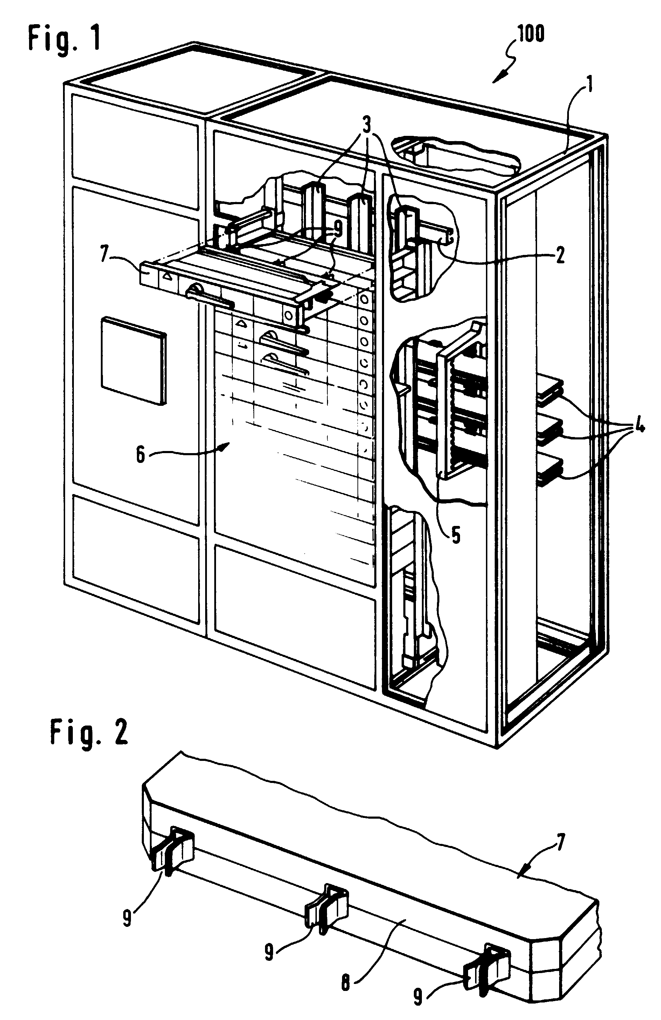

Wenn im Folgenden von "vorn" die Rede ist, so bezieht sich die Angabe auf die dem Betrachter zugewandte Seite gemäß der Frontansicht in Fig. 1. Die Angaben "links" und "rechts" beziehen sich auf den Betrachtersinn, mit den Angaben "oben" und "unten" ist die eingebaute Lage des erfindungsgemäßen Berührungsschutzes in einem Schaltschrank gemeint, welcher sich in seiner aufrechten Betriebsposition befindet.

Der in Fig. 1 mit 100 bezeichnete Schaltschrank umfaßt eine Anzahl von mit dem Rahmen 1 des Schaltschranks 100 verbundenen über die Höhe des Schaltschranks 100 verteilten Querträgern 2, an denen über Isolatoren senkrechte Feldverteilschienen 3 befestigt sind. Rückseitig der Feldverteilschienen sind quer Hauptsammelschienen 4 in dem Schaltschrank 100 angeordnet, welche der Stromzufuhr an die Feldverteilschienen 3 dienen und mit welchen die Feldverteilschienen 3 elektrisch kontaktiert sind. Getragen werden die Sammelschienen 4 durch mindestens zwei horizontalen Abstand zueinander aufweisende elektrisch isolierende Sammelschienenhalter 5. In einem dafür vorgesehenen Funktionsraum 6 sind Schaltgeräte 7 horizontal von vorn einschiebbar, welche im komplett eingeschobenen Zustand über an ihrer Rückseite 8 vorgesehene, eine Feldverteilschiene 3 beidseitig umfassende Klemmkontakte 9 (Stecktulpen) den elektrischen Kontakt zwischen dem Schaltgerät 7 und den Feldverteilschienen 3 herstellen. Die Anordnung der Klemmkontakte 9 an der Rückseite 8 eines Schaltgeräts 7 ist in Fig. 2 in einer Rückansicht eines Schaltgeräts 7 dargestellt.

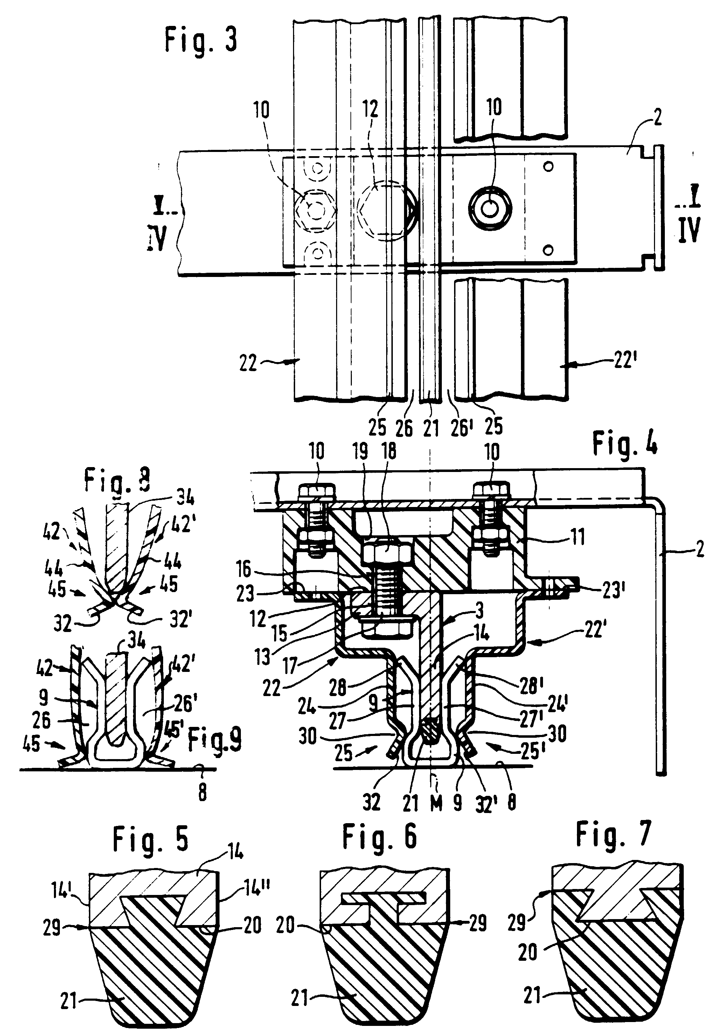

Der Aufbau des erfindungsgemäßen Berührungsschutzes für die Feldverteilschienen soll anhand des in den Fig. 3 und 4 dargestellten Ausschnitts der Umgebung einer Befestigungsstelle erläutert werden. An der Vorderseite einer Tragschiene 2 ist mittels zweier Schrauben 10 ein Isolierträger 11 befestigt, welcher eine Befestigungsstelle 12 für eine Feldverteilschiene 3 bildet. Die aus Kupfer bestehende Feldverteilschiene 3 ist im Querschnitt als 90° Winkelprofil mit einer Schenkeldicke von 10 mm ausgebildet. Der kürzere Befestigungsschenkel 13 weist parallel zur Mittelebene M des sich nach vorn erstreckenden eine Kontaktschiene 14 bildenden längeren Schenkels angeordnete Bohrungen 15 auf, welche jeweils mit einer in einen Isolierträger 11 eingebracht Bohrung 16 korrespondieren. Der Befestigung der Feldverteilschiene 3 an dem Isolierträger 11 dient eine in die Bohrungen 15,16 eingebrachte Sechskantschraube 17, welche in eine in einer rückseitigen Ausnehmung 19 des Isolierträgers 11 ruhenden Sechskantmutter 18 eingreift. An der Vorderseite 20 der Kontaktschiene 14 trägt diese auf ihrer ganzen Länge eine die Vorderseite 20 überdeckende elektrisch isolierende Abdeckleiste 21, welche nach vorn einen sich symmetrisch zur Mittelebene M verjüngenden Querschnitt aufweist und deren vordere Längskanten abgerundet sind. Besonders gut geeignet zur Herstellung der Abdeckleiste 21 ist ein glasfaserverstärkter Polyester-Werkstoff.

Die rückseitige Befestigung der Abdeckleiste 21 an der Vorderseite 20 der Kontaktschiene 14 kann mit Hilfe der in Fig. 5, 6 und 7 dargestellten oder ähnlicher ineinandergreifender hinterschnittener Profile erfolgen. Durch die sich nach vorn verjüngende Form der Abdeckleiste 21 und die abgerundeten vorderen Längskanten wird die zum Aufschieben eines Klemmkontaktes 9 benötigte Kraft erheblich herabgesenkt. An den Stellen 29 gehen die seitlichen Begrenzungen 21',21'' der Abdeckleiste 21 absatzlos in die Seitenflächen 14',14'' der Kontaktleiste 14 über, um jeglichen Widerstand an dieser Stelle 29 beim Einführen und Herausziehen eines Klemmkontaktes 9 zu vermeiden.

Seitlich der Feldverteilschiene 3 sind symmetrisch zur Mittelebene M die Feldverteilschiene 3 seitlich vollständig überdeckende und sich über die ganze Länge erstreckende Abdeckprofile 22,22' aus einem elastisch verformbaren, aber relativ formsteifen, elektrisch isolierendem Kunststoff angeordnet, welche in ihrem Querschnitt zwei Stufen aufweisen. Mit einer den hinteren Abschluß bildenden ebenen Begrenzungsfläche 23,23' ruhen die Abdeckprofile 22,22' auf der ebenen Vorderseite des Isolierträgers 11 und sind dort befestigt. Sie sind innenseitig der Begrenzungsflächen 23,23' von dem Isolierträger 11 hinweg abgewinkelt (erste Stufe) und in einigem Abstand vor diesem gegen die Kontaktschiene 11 hin erneut abgewinkelt (zweite Stufe). Von dieser Stufe aus erstrecken sie sich nach vorn bis über die Vorderseite 20 der Kontaktschiene hinaus und bis neben die Abdeckleiste 21 derart, daß die vorderen ebenen Seitenflächen 24,24' der seitlichen Abdeckprofile 22,22' parallel zur Mittelebene M in einem geringen seitlichen Abstand von den Seitenflächen 14',14'' von der Kontaktschiene 14 angeordnet sind. Die zweite Stufe verleiht den Abdeckprofilen 22,22' eine Gestaltfestigkeit, so daß die vorderen Seitenflächen 24,24' trotz der Nachgiebigkeit der Abdeckprofile im Ganzen parallel zu den Seitenflächen 14,14' der Kontaktschiene 14 bleiben. Den vorderen Abschluß der Abdeckprofile 22,22' bildet jeweils eine angeformte in Höehe der Abdeckleiste 21 nach innen gerichtete versteifende Rinne oder Sicke 30, die in einem von der Mittelebene M schräg nach außen weisenden Fortsatz 25,25'ausläuft. Von vorn gesehen bilden die Abdeckprofile 22,22' zur Oberfläche der Abdeckleiste 21 beidseitig der Mittelebene M und zu dieser parallel und symmetrisch jeweils einen Spalt 26,26', der beidseitig von isolierenden Teilen, nämlich 25,21 bzw. 21,25' begrenzt ist und dessen Spaltbreiten zu gering ist um mit dem Finger versehentlich an die spannungsführende Kontaktschiene 14 gelangen zu können. Dies kann mit einem genormten Prüffinger getestet werden.

Bei der Montage eines Schaltgerätes 7 werden während des Einschiebevorgangs zunächst die beiden Schenkel 27,27' des Klemmkontaktes 9 durch die Abdeckleiste 21 auseinandergedrückt, wobei die abgespreizten Enden 28,28' der Schenkel 27,27' gegen die Fortsätze 25,25' der Abdeckprofile 22,22' wirken und lokal die Spalte 26,26' aufweiten, so daß ein vollständiges Aufschieben des Kontaktes 9 auf die Kontaktschiene 14 der Feldverteilschiene 3 und damit ein komplettes Einschieben des Schaltgerätes 7 möglich ist. Wenn die abgespreizten Enden 28,28' die eine Engstelle bildenden Sicken 30 passiert haben, springen die vorderen Teile der Abdeckprofile 22,22' wieder in die in Fig. 4 gezeigte Normallage zurück. Die Steifigkeit der Abdeckprofile 22,22' ist so zu wählen, daß beim Einschiebvorgang der Klemmkontakte 9 die Aufweitung noch ohne zu großen Kraftaufwand von Hand möglich ist, die vorderen Bereiche 24,25 bzw 24',25' aber nicht durch eine versehentliche Berührung mit der Hand oder einem Finger so weit verlagert werden können, daß durch die Spalte 26,26' (Fig.3) hindurch eine Berührung der spannungsführenden Kontaktschiene 14 mit einem Finger möglich wird.

In den Fig. 8 und 9 ist eine andere Ausführungsform dargestellt, bei der die Kontaktschiene 34 zwar ebenfalls nach vorn abgeschrägt und abgerundet ist, jedoch keine Abdeckleiste trägt. Der Berührungsschutz wird hier ganz von den Abdeckprofilen 42,42' übernommen, die eine leicht gegen die Kontaktschiene 34 gebogene Gestalt aufweisen und sich mit ihren vorderen Bereichen 45,45' vor der Vorderkante der Kontaktschiene 34 einander annähern, entweder ganz, wie in Fig. 8 wiedergegeben, oder bis auf einen schmalen Spalt, der die Berührung der Vorderkante der Kontaktschiene 34 nichtsdestoweniger verhindert. Wenn der Klemmkontakt 9 eingeführt wird, gleitet er wie bei der Ausführungsform nach Fig. 4 an den schrägen Fortsätzen 32,32' ab und drängt die vorderen Bereiche 45,45' der Abdeckprofile 42,42' aus der kräftefreien Lage nach Fig. 9 auseinander, d.h. er spreizt die Abdeckprofile 42,42' an der Einführungsstelle etwas auseinander, während sie in einigem Abstand von der Einführungsstelle ihre vorherige Lage beibehalten, in der sie die Kontaktschiene 34 schützend umschließen. An der Einführungsstelle macht das Spreizen nicht viel aus, weil hier das Schaltgerät 7 davorgelegen ist (Fig. 1 und 2) und die Berührung ohnehin nicht möglich ist.

## Patentansprüche

1. Berührungsschutz für Stromverteilerschienen, insbesondere für Feldverteilschienen (3) in Niederspannungsverteilerschränken (100),
mit einer mindestens einen Teil einer Feldverteilschine (3) bildenden, den elektrischen Kontakt zu zwei Schenkel (27,27') aufweisenden Klemmkontakten (9) von installierbaren Schaltgeräten herstellenden, an einem Isolierträger (11) gehaltenen Kontaktschiene (14,34),
wobei ein sich längs der Kontaktschiene (14,34) erstreckendes, die Kontaktschiene (14,34) seitlich im wesentlichen überdeckendes, elektrisch isolierendes, flexibles, von einem der Schenkel (27,27') beim Aufschieben des Klemmkontaktes (9) wegdrückbares Abdeckprofil (22,22';42,42') vorgesehen ist, welches sich mit seinem vorderen Bereich (25,25;45,45') mindestens bis neben die vordere Kante der Kontaktschiene (14,34) erstreckt,
**dadurch gekennzeichnet**,
daß der Klemmkontakt (9) sich mit seinen beiden Schenkeln (27,27') spangenartig an die beiden Seiten der Kontaktschiene (14,34) anlegt,
daß zwei in ihrer Querschnittsform identische und symmetrisch zur Mittelebene (M) der Kontaktschiene (14,34) angeordnete Abdeckprofile (22,22') mit ihren den hinteren Abschluß bildenden Begrenzungsflächen (23,23') an dem Isolierträger (11) befestigt und nach vorn derart abgebogen sind, daß sie mit ihrer vorderen Seitenfläche (14,14') der Kontaktschiene (14,34) dicht benachbart verlaufen und einander bei nicht eingeführtem Klemmkontakt (9) vor der vorderen Kante der Kontaktschiene (14,34) derart annähern, daß ein Durchgriff mit einem Finger bis zur Berührung der Kontaktschiene (14,34) nicht möglich ist, während aber ein Einführen des Klemmkontaktes (9) mit seinen Schenkeln (27,27') von vorn unter lokalem Auseinanderdrücken der Abdeckprofile (22,22';42,42') in die Spalte (26,26') zwischen der Kontaktschiene (14,34) und den Abdeckprofilen (22,22';42,42') möglich ist.

2. Berührungsschutz nach Anspruch 1, **dadurch gekennzeichnet**, daß an der Kontaktschiene (14) eine ihre Vorderseite (20) überdeckende, längs derselben verlaufende elektrisch isolierende Abdeckleiste (21) angeordnet ist.

3. Berührungsschutz nach Anspruch 2, **dadurch gekennzeichnet**, daß die Kontaktschiene (34) bzw. die Abdeckleiste (21) einen sich symmetrisch zur Mittelebene (M) der Kontaktschiene (34,14) nach vorn verjüngenden Querschnitt aufweisen.

4. Berührungsschutz nach Anspruch 2 oder 3, **dadurch gekennzeichnet**, daß die vorderen Längskanten der Kontaktschiene (34) bzw. der Abdeckleiste (21) abgerundet sind.

5. Berührungsschutz nach einem der Ansprüche 2 bis 4, **dadurch gekennzeichnet**, daß die Abdeckleiste (21) auf ihrer Rückseite ein hinterschnittenes Profil aufweist, welches mit der ein Gegenprofil bildenden Vorderseite (20) der Kontaktschiene (14) durch Einrasten oder Einschieben verbindbar ist.

6. Berührungsschutz nach einem der Ansprüche 2 bis 5, **dadurch gekennzeichnet**, daß die Abdeckleiste (21) auf ihrer Rückseite absatzlos in die Seiten der Kontaktschiene (14) übergeht.

7. Berührungsschutz nach einem der Ansprüche 2 bis 6, **dadurch gekennzeichnet**, daß die Abdeckleiste (21) aus einem temperaturbeständigen Kunststoff hergestellt ist.

8. Berührungsschutz nach Anspruch 7, **dadurch gekennzeichnet**, daß die Abdeckleiste (21) aus glasfaserverstärktem Polyester hergestellt ist.

9. Berührungsschutz nach einem der Ansprüche 1 bis 8, **dadurch gekennzeichnet**, daß die vorderen Seitenflächen (24,24') der Abdeckprofile (22,22') eben sind und bei nicht eingeführtem Klemmkontakt (9) parallel zur Kontaktschiene (14) verlaufen.

10. Berührungsschutz nach einem der Ansprüche 1 bis 9, **dadurch gekennzeichnet**, daß die Abdeckprofile (22,22';42,42') jeweils einen den vorderen Abschluß des Abdeckprofils (22,22';42,42') bildenden schräg von der Mittelebene nach vorn außen weisenden Fortsatz (32,32') umfassen.

11. Berührungsschutz nach einem der Ansprüche 1 bis 10, **dadurch gekennzeichnet**, daß die Abdeckprofile (22,22') von den Begrenzungsflächen (13,13') in zwei Stufen nach vorn gegen die Kontaktschiene (14) hin abgewinkelt sind.

12. Berührungsschutz nach einem der Ansprüche 1 bis 11, **dadurch gekennzeichnet**, daß die Feldverteilschiene (3) im Querschnitt als 90°-Winkelprofil ausgebildet ist, wobei der eine Schenkel einen der Montage der Feldverteilschiene (3) mittels des Isolierträgers (11) an einem Träger (2) und gleichzeitig der Kontaktierung mit Sammelschienen (4) dienenden Befestigungsschenkel (13), der andere Schenkel die Kontaktschiene (14) zum Aufschieben der Klemmkontakte (9) eines Schaltgerätes (7) bildet.

13. Berührungsschutz nach Anspruch 12, **dadurch gekennzeichnet**, daß die Schenkeldicke des Winkelprofils etwa 10 mm beträgt.

## Claims

1. Protection against touching for busbars, in particular for district distribution bars (3) in low voltage distribution cabinets (100),
with at least one contact rail (14, 34) forming part of a district distribution bar (3), held on an insulating support (11) and producing the electric contact to clip-on contacts (9) having two limbs (27, 27') of plug-in switching apparatus,
there being provided a covering profile (22, 22'; 42, 42') which extends along the contact rail (14, 34), substantially covering over the contact rail (14, 34) laterally, the covering being electrically insulating and flexible and being pushed aside by one of the limbs (27, 27') when the contact (9) is slid into place, the forward region (25, 25;45,45') extending at least up to adjacent the leading edge of the contact rail (14, 34),
**characterised in that**,
the contact (9) has its two limbs (27, 27') gripping the two sides of the contact rail, (14, 34),
that two covering profiles (22, 22') identical in cross-section and arranged symmetrically with respect to the central plane (M) of the contact rail (14, 34) have their bounding surfaces (23, 23') which form their rear termination secured to the insulating support (11) and are bent forwards in such a way that their forward side faces (14, 14') extend closely adjacent to the contact rail (14, 34) and approach one another, before the clamping contact (9) is inserted, in front of the leading edge of the contact rail (14, 34) in such a way that it is impossible to insert a finger sufficiently far to touch the contact rail (14, 34), whilst however, it is possible to introduce the limbs (27, 27') of the contact (9) into the gaps (26, 26') between the contact rail (14, 34) and the covering profiles (22, 22'; 42, 42'), from the front, locally spreading apart the profiles (22, 22', 42, 42').

2. Protection against touching according to claim 1, **characterised in that** an electrically insulating covering strip (21) is arranged on the contact rail (14), overlying its leading face (20) and extending along it.

3. Protection against touching according to claim 2, **characterised in that** the contact rail (34) and/or the covering strip (21) have a cross-section which tapers towards the front symmetrically with respect to the central plane (M) of the contact rail (34, 14).

4. Protection against touching according to claim 2 or 3, **characterised in that** the forward longitudinal edges of the contact rail (34) and/or of the covering strip (21) are rounded off.

5. Protection against touching according to one of claims 2 to 4, **characterised in that** the covering strip (21) has on its rear face an undercut section engaging a complementary section formed on the front face (20) of the contact rail (14) by interengagement or by sliding it in.

6. Protection against touching according to one of claims 2 to 5, **characterised in that** the covering strip (21) merges smoothly into the sides of the contact rail (14) without any step.

7. Protection against touching to one of claims 2 to 6, **characterised in that** the covering strip (21) is made from heat-resistant plastics.

8. Protection against touching according to claim 7, **characterised in that** the covering strip (21) is made from a glass-fibre-reinforced polyester.

9. Protection against touching according to one of claims 1 to 8, **characterised in that** the forward side faces (24, 24') of the covering profiles (22, 22') are flat and before insertion of the clamping contact (9) they extend parallel to the contact rail (14).

10. Protection against touching according to one of claims 1 to 9, **characterised in that** the covering profiles (22, 22'; 42, 42') each include an extension (32, 32') projecting in an inclined direction outwards and forwards from the central plane and forming the forward termination of the covering profile (22, 22'; 42, 42').

11. Protection against touching according to one of claims 1 to 100, **characterised in that** the covering profiles (22, 22') are angled back away from the bounding surfaces (13, 13') in two stages forwards against the contact rail (14).

12. Protection against touching according to one of claims 1 to 11, **characterised in that** the district distribution bar (3) is made as a 90° angle profile in cross-section, the one limb forming an attachment limb (13) serving for mounting the district distribution bar (3) by means of the insulating support (11) on a carrier (2) and simultaneously making contact with the main busbar (4), the other limb forming the contact rail (14) onto which the contact (9) of a switch installation (7) is slid.

13. Protection against touching according to claim 12, **characterised in that** the thickness of the limbs of the angle-section profile amounts to about 10mm.

## Revendications

1. Protection contre les contacts accidentels avec des barres de distribution de courant, en particulier avec des barres omnibus de ligne (3) à l'intérieur d'armoires de distribution en basse tension (100), dans laquelle au moins une barre de contact (14, 34) montée sur un support isolant (11) constitue au moins une partie d'une barre omnibus de ligne et établit le contact électrique avec des contacts à serrage (9) comportant deux branches (27, 27') et appartenant à des appareils de commutation à brancher, il est prévu, le long de la barre de contact (14, 34) et la recouvrant essentiellement latéralement, un profilé de couverture (22, 22', 42, 42') isolant électriquement, flexible et pouvant s'écarter sous la poussée d'une des branches (27, 27') du contact à serrage (9) quand on fait coulisser celui-ci, ce profilé s'étendant par sa partie avant (25, 25' ; 45, 45') au moins jusqu'au bord avant de la barre de contact (14, 34),
caractérisée en ce que
- le contact à serrage (9) est en appui par ses deux branches (27, 27') à la manière d'une agrafe, sur les deux faces de la barre de contact (14, 34),
- deux profilés de couverture (22, 22') de sections identiques et symétriques par rapport au plan médian (M) de la barre de contact (14, 34) sont fixés sur le support isolant (11) par leurs portées (23, 23') formant fermeture arrière,
- les profilés de couverture (22, 22') sont coudés vers l'avant de manière que leurs faces latérales (14, 14') soient peu éloignées de la barre de contact (14, 34) et soient, lorsque le contact à serrage (9) n'est pas engagé, suffisamment rapprochées en avant du bord antérieur de la barre de contact (14, 34) pour qu'un doigt ne puisse toucher cette barre (14, 34), mais que l'introduction par l'avant, du contact à serrage (9) avec ses branches (27, 27'), dans les fentes (26, 26') existant entre le rail de contact (14, 34) et les profilés de couverture (22, 22' ; 42, 42') soit possible par écartement localisé de ces profilés de couverture.

2. Protection selon la revendication 1,
caractérisée en ce que
la barre de contact (14) porte une baguette isolante (21) recouvrant sa face avant (20) sur toute la longueur.

3. Protection selon la revendication 2,
caractérisée en ce que
la barre de contact (34) et la baguette de couverture (21) présentent chacune une section symétrique par rapport au plan médian (M) de la barre de contact (34, 14), allant en s'amincissant vers l'avant.

4. Protection selon la revendication 2 ou 3,
caractérisée en ce que
les bords longitudinaux avant de la barre de contact (34) et de la baguette de couverture (21) sont arrondis.

5. Protection selon l'une des revendications 2 à 4,
caractérisée en ce que
la baguette de couverture (21) présente à l'arrière un profil en contredépouille qui peut être relié par emmanchement ou coulissement à une partie avant (20) de la barre de contact (14), présentant un profil complémentaire.

6. Protection selon l'une des revendications 2 à 5,
caractérisée en ce que
la baguette de couverture (21), à sa partie arrière, prolonge sans décrochement les faces de la barre de contact (14).

7. Protection selon l'une des revendications 2 à 6,
caractérisée en ce que
la baguette de couverture (21) est faite d'une matière plastique résistant à la chaleur.

8. Protection selon l'une des revendications 2 à 6,
caractérisée en ce que
la baguette de couverture (21) est faite de polyester renforcé par des fibres de verre.

9. Protection selon l'une des revendications 1 à 8,
caractérisée en ce que
les faces latérales avant (24, 24') des profilés de couverture (22, 22') sont planes et parallèles à la barre de contact (14), quand le contact à serrage (9) n'est pas monté.

10. Protection selon l'une des revendications 1 à 9,
caractérisée en ce que
les profilés de couverture (22, 22' ; 42, 42') se ferment chacun, vers l'avant, par un bord saillant (32, 32'), oblique par rapport au plan médian du rail et dirigé vers l'extérieur.

11. Protection selon l'une des revendications 1 à 10,
caractérisée en ce que
les profilés de couverture (22, 22'), à partir de leurs portées (13, 13'), sont coudés pour former deux gradins s'avançant vers le rail de contact (14).

12. Protection selon l'une des revendications 1 à 11,
caractérisée en ce que
la barre omnibus de ligne (3) est un profilé coudé à 90° dont une aile (3) sert au montage par fixation au moyen d'un isolateur (11) sur un support (2) et également au contact avec les barres collectrices (4), tandis que l'autre branche constitue la barre de contact (14) sur laquelle on peut glisser le contact à serrage (9) d'un contacteur (7).

13. Protection selon la revendication 12,
caractérisée en ce que
l'épaisseur des branches du profilé coudé (cornière) est d'environ 10 mm.
